# EUROPEAN PATENT APPLICATION

(11) **EP 1 085 680 A2**
(43) Date of publication of application: **21.03.2001**
(21) Application number: 00307879.7
(22) Date of filing: 12.09.2000
(51) Int. Cl.: H04B 7/185

(54) **Dynamic filter controller for LEO satellites**

(30) Priority: 14.09.1999 US 395265
(71) Applicant: Globalstar L.P., San Jose, California 95134-0670 (US)
(72) Inventor: Weideman, Robert A., Sedalia, Colorado 80135 (US); Hirshfield, Edward, Cupertino, California 95014 (US)
(74) Representative: Ertl, Nicholas Justin

(57) **Abstract**

A method and system for reducing the power consumption of a communication satellite that includes a RF transponder. The method has steps of (a) operating at least one gateway (18) to derive a historical record of demand for the transponder as a function of time and location within at least a portion of a service area; (b) using the historical record in predicting a future demand for the transponder as a function of time and location within the service area; and (c) varying a bandwidth of an input filter (6A) of the transponder in accordance with the predicted future demand so as to reduce an amount of received noise that is amplified by the transponder. The step of varying includes preliminary steps of generating a filter bandwidth programming schedule in accordance with the predicted demand; and then storing the filter bandwidth programming schedule in a memory of the satellite for use in varying the bandwidth of the input filter (6A) at predetermined times relative to local times within the service area, and/or relative to predetermined locations relative to the service area. The step of predicting predicts the future demand as a function of individual beams of a multiple beam transponder receive antenna, and the step of varying preferably varies the bandwidth on a beam by beam basis.

## Description

### FIELD OF THE INVENTION:

This invention relates to a repeater-based communication system and, more particularly, to methods and apparatus for optimizing power utilization in a repeater-based communication system, such as a mobile satellite communication system that employs one or more satellite repeaters, such as "bent pipe" communication satellites.

### BACKGROUND OF THE INVENTION:

Satellite and terrestrial communications systems provide for personal telephone voice, data, position location, and other means of mobile and fixed communications. These systems are deployed according to economic utilization, market coverage, and technical realization.

The satellites for these communications services generally operate in Low Earth Orbit (LEO) or in Medium Earth Orbit (MEO), and occasionally in Geosynchronous Orbit (GEO). The satellites are of two basic types, and function either with on-board processing or as a bent pipe repeater. The classical bent pipe repeater type generally contains linear or limiting transponders which receive signals from terrestrial gateways and repeat the received signals toward user terminals, usually in many transmitted forward link or down link beams. Likewise, the bent pipe repeater receives signals from user terminals deployed on the earth in various reverse link or uplink beams, and repeats these signals towards one or more terrestrial gateways.

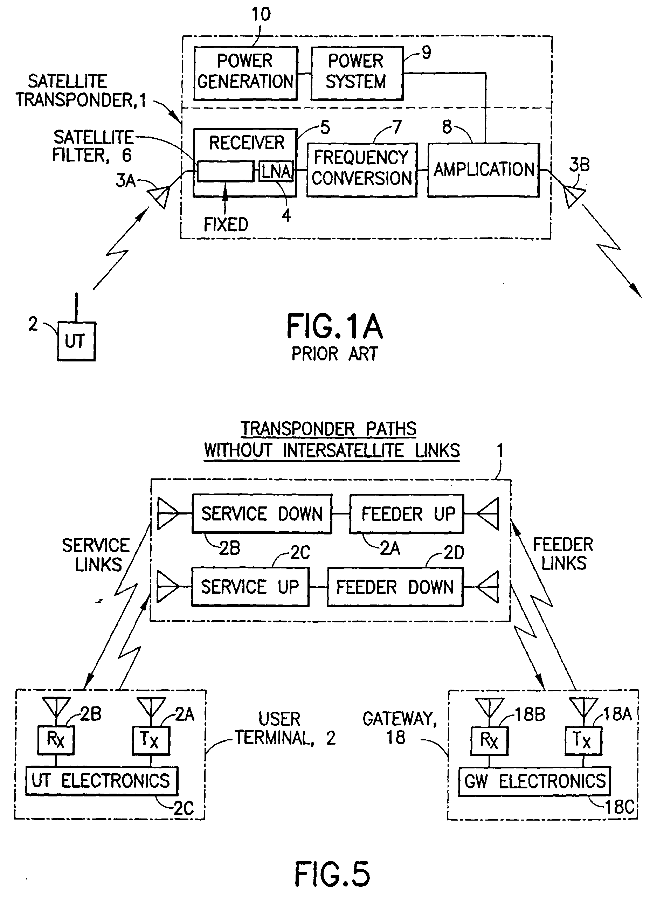

In the satellite communication systems of the prior art, as shown in Fig. 1A, a satellite transponder 1 receives signals in a return uplink from a terrestrially located user terminal (UT) 2 via a receive antenna 3A that is coupled to a low noise amplifier (LNA) 4 within a receiver 5. Generally, the satellite transponder 1 has a filter 6 placed in front of the LNA 4 to reject noise outside of the desired bandwidth of reception, to reduce intermodulation products, and to reduce unwanted signal input and other undesired inputs to the satellite transponding process. The signal input in the return uplink to the satellite transponder 1 is established by the fixed bandpass characteristic of the filter 6, and thus the return (uplink) bandwidth of the transponder 1 is typically fixed at some value. The bandwidth may be as wide as the authorized total frequency for satellite uplinks, or it may be reduced by channelization into various sub-bands. In any case, the amount of frequency used depends on the occupied uplink frequency that has the desired signals, and on the unoccupied bandwidth which contains only noise. Present in the return uplink bandwidth, along with the desired signals from the UTs 2, are thermal noise, man-made noise, and other noise or unwanted signal sources that are input to the antenna 3A and passed to the LNA 4 via the input filter 6. The input noise and signal(s) are amplified by the LNA 4, along with the desired signals, and passed to frequency conversion equipment 7 and thence to a transmit antenna 3B, via a downlink amplifier 8 (for linear or limiting transponders). The downlink amplifier 8 amplifies all signals that are presented to it. That is, the power of the desired signals and the power of undesired uplink noise and signal(s) in the band are both amplified without discrimination. As such, the power required to amplify the unused portion of the band is, in effect, amplifying only undesired noise and unwanted signal(s), thus wasting satellite power. A satellite power system 9 supplies the transponder with power from a power generation source 10, which can include solar arrays and batteries on-board the satellite 1. The power required to amplify the undesired noise clearly represents wasted capacity of the satellite power system 9. This wasted capacity results in the satellite power system 9, and thus the satellite transponder 1, being required to have increased mass, which correspondingly increases the cost to boost the satellite into orbit.

More particularly, the power consumption of a satellite is an important element to minimize, since there is a finite amount of power that is available. In general, with a non-geosynchronous communications satellite system, the power available from the constellation of satellites yields the number of circuits that may be supported in the busiest hour, as the busiest hour progresses around the earth from time zone to time zone. Thus, at any instant the satellites which are orbiting an area can deliver a certain amount of circuits to the area depending on several factors: the state of the power system, the number of satellites covering the area, and the amount of spectrum available to be utilized. Assuming that the amount of spectrum is not limiting the delivery of power, the first two factors dominate.

A solar power generator is expensive since it is costly to build and launch, as space batteries are typically very heavy. The cost of satellite launching is a strong function of the weight that is required to be lifted. Therefore, power in watts and watt-hours determines the financial viability of a system to a large degree. In order to minimize the weight of the battery of the user terminal, and to minimize the cost and weight of the space power system, it is useful to only transmit the minimum power necessary to close the aggregate of the desired RF links.

### OBJECTS AND ADVANTAGES OF THE INVENTION

The present invention seeks to provide an improved system and method to optimize the power utilization on a satellite.

The present invention also seeks to provide a technique to selectively set the return link (uplink) bandwidth according to a number of desired channels, or a bandwidth of desired channels.

Furthermore, the present invention seeks to provide a technique to change the bandwidth of the return uplink filter in response to actual or expected occurrence of communication traffic, and/or based on an amount of traffic, to optimize the utilization of the power on the satellite and to reduce the orbit average power used on the satellite, thus reducing the size and mass of the satellite power system.

The present invention also seeks to provide a technique to effectively tune the bandwidth of the return uplink transponder filter in response to an actual or an expected or predicted demand in order to reduce the power system cost by reducing the required solar array and battery size. This also reduces the launch cost, as well as the dependence on the battery, which furthermore beneficially reduces the battery cycling history.

The present invention also seeks to provide a technique for automatically turning pilot channel(s) on and off.

### SUMMARY OF THE INVENTION

A satellite transponder that is constructed and operated in accordance with the teachings of this invention overcomes the foregoing and other problems by selectively controlling the return uplink bandwidth to reduce received input noise and unwanted signals, and to thus optimize the power demand of the communications satellite. Control of the return uplink bandwidth may be commanded in near real time, or may be preprogrammed into a controller that is located on-board the satellite or on the ground. The bandwidth control is preferably achieved by providing a receiver input bandpass filter having, by example, a frequency pass band that is dynamically and continuously controllable. However, in other embodiments of the invention the bandwidth control can be provided by a bank of filters that are switchably coupled in and out of the circuit as required.

Methods and apparatus are disclosed for reducing the power utilized on a satellite by reducing the received input noise and unwanted signals. For this reason retransmission of unwanted signals and noise by the satellite repeater is avoided by the use of a commanded or a preprogrammed reduction in bandwidth of a received band of frequencies, as the satellite orbits the earth. This invention may be used by a wide variety of satellite transponder designs, including an illustrative low earth orbit (LEO) satellite system providing mobile satellite services.

According to one aspect of the present invention, there is provided a communication satellite, comprising:
an RF transponder comprising a receive antenna (3A), an input filter (6A) having a programmable bandwidth, a receive amplifier (7), a transmit amplifier (8), and a transmit antenna (38) coupled together in series; and
an input filter controller (12) having an output coupled to said input filter for programming the filter bandwidth as the satellite orbits the earth.

In accordance with this invention the input filter of the return or reverse link (user terminal to gateway) satellite transponder is changed in bandwidth according to the requirements determined beforehand or in real time so as to correctly amplify and pass the desired reverse uplink signals. The change or reduction in bandwidth according to the number or bandwidth of desired frequency channels thus reduces the input noise component of the total received signal, and thereby conserves at least reverse downlink transmitter power. An on-board bandwidth controller provides a means to vary the input filter bandwidth, which may be switched or continuously controlled. The input filter bandwidth variations may be either pre-programmed, according to the time or position versus time of the satellite, or they may be static, or they may vary in real time. It is within the scope of this invention to control the bandwidth of the input filter in real time via direct commanding from a ground station, or by a periodically uploaded lookup table, thus eliminating or reducing the need for a satellite control processor which exercises control over the on-board bandwidth controller.

A method is disclosed for reducing the power consumption of a communication satellite that includes a RF transponder. The method comprises steps of (a) operating at least one gateway to derive a historical record of demand for the transponder as a function of time and location within at least a portion of a service area; (b) using the historical record in predicting a future demand for the transponder as a function of time and location within the service area; and (c) varying a bandwidth of an input filter of the transponder in accordance with the predicted future demand so as to reduce an amount of received noise that is amplified by the transponder.

The step of varying includes preliminary steps of generating a filter bandwidth programming schedule in accordance with the predicted demand; and then storing the filter bandwidth programming schedule in a memory of the satellite for use in varying the bandwidth of the input filter at predetermined times relative to local times within the service area, and/or relative to predetermined locations relative to the service area.

The step of predicting predicts the future demand as a function of individual beams of a multiple beam transponder receive antenna, and the step of varying preferably varies the bandwidth on a beam by beam basis.

In a further aspect this invention provides a communication satellite that comprises a forward link RF transponder having a feeder uplink receive antenna, a receive amplifier, a filter having a programmable bandwidth, a transmit amplifier, and a service downlink transmit antenna that are coupled together in series. A filter controller has an output coupled to the filter for programming the filter bandwidth as the satellite orbits the earth for reducing an effect of feeder uplink interference on service downlink transmission power.

### BRIEF DESCRIPTION OF THE DRAWINGS

Examples of the present invention will now be described in detail with reference to the accompanying drawings, in which:
Fig. 1A is a block diagram showing the general operation of a satellite transponder of a mobile satellite system that is constructed and operated in accordance with the prior art;
Fig. 1B is a block diagram showing the general operation of a satellite transponder of a mobile satellite system that is constructed and operated in accordance with the teachings of this invention;
Figs. 2A-2D are each a schematic diagram of representative prior art satellite transponders;
Fig. 3 is a block diagram of a representative satellite in accordance with an embodiment of this invention;
Fig. 4 shows various satellite orbital configurations and coverage areas;
Fig. 5 is a block diagram of a satellite, a user terminal and a gateway, and is useful for showing forward and reverse service (traffic) and feederlinks;
Fig. 6 is a simplified, overall system-level diagram;
Fig. 7 is a schematic diagram of a return link transponder of the satellite shown in Fig. 3, as well as representative beam patterns;
Fig. 8 is a block diagram of the ground operations control center first shown in Fig. 6, as well as its external connections;
Fig. 9 is a block diagram of the satellite operations control center first shown in Fig. 6, as well as its external connections;
Fig. 10 depicts an exemplary single orbit of a satellite, where the satellite is shown in several positions within the single orbit at various local times, and further shows the variation in traffic (demand) for the satellites reverse link transponder;
Fig. 11 graphically depicts the traffic and corresponding filter configurations, as a function of time, for three beams of the satellite shown in Fig. 10;
Fig. 12 depicts a 'snapshot' in time of a constellation of 48 satellites each with 16 beams, wherein beams which have higher than a minimum bandwidth activated are shown darkened;
Fig. 13 depicts another embodiment of the satellite, one that comprises an on-board traffic sensing system;
Fig. 14 is a logic flow diagram of a method in accordance with this invention for reducing the power consumption of a communication satellite that includes a RF transponder; and
Fig. 15 is a simplified block diagram of a forward link transponder having a tuneable or switchable narrow band filter in accordance with a further aspect of this invention.

### DETAILED DESCRIPTION OF THE INVENTION

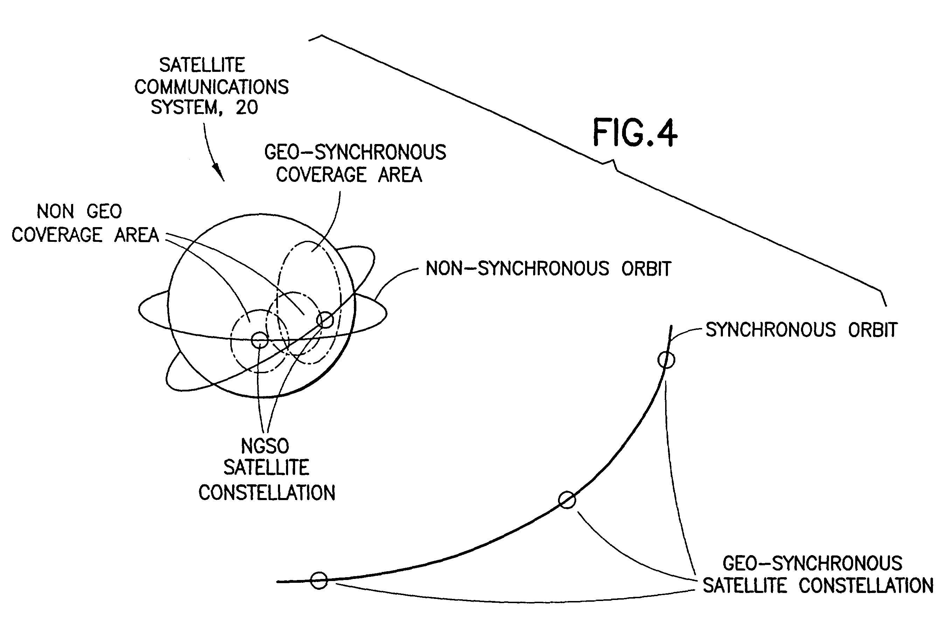

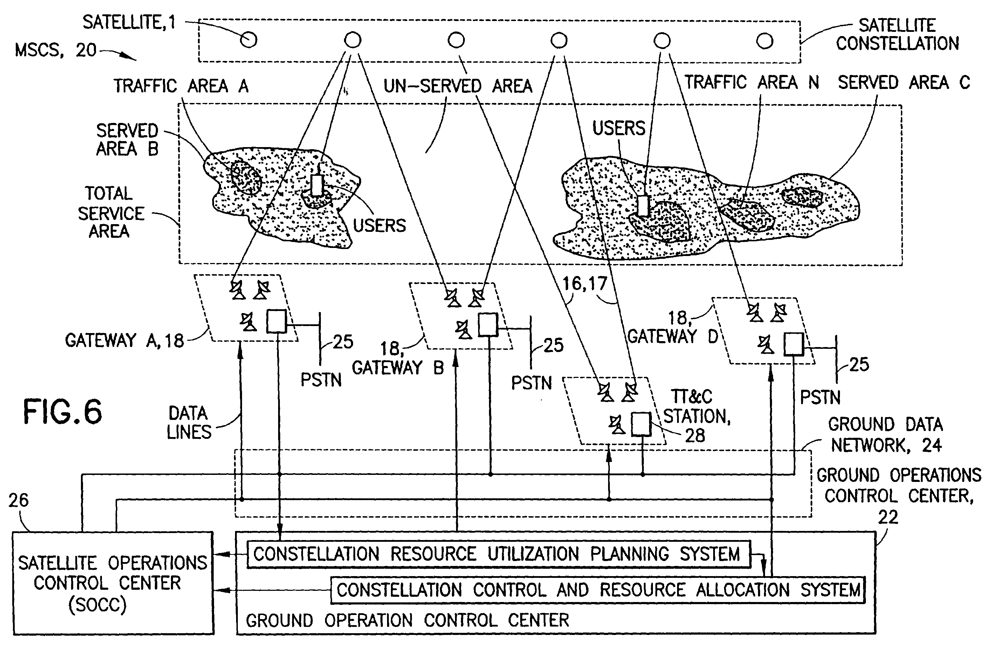

Reference is made first to Figs. 4, 5 and 6 for illustrating various embodiments of non-geosynchronous (NGSO) and geo-synchronous (GEO) constellations, orbits and their associated coverage areas (Fig. 4), a simplified block diagram of a user terminal (UT) 2, gateway (GW) 18, and forward and reverse transponders of the satellite 1 (Fig. 5), and an overall simplified diagram of a Mobile Satellite Communications System (MSCS) 20 (Fig. 6), which can be used to practice this invention. While described in the context of the MSCS 20, those skilled in the art should appreciate that the teachings of this invention have application to certain terrestrial telecommunications systems as well.

The MSCS 20 includes at least one, but typically many, wireless user terminals (UTs) 2, at least one, but typically several, communications satellite 1, and at least one, but typically several, communication ground stations or gateways (GWs) 18.

Reference in this regard can be had, by example, to U.S. Patent No.: 5,526,404, "Worldwide Satellite Telephone System and a Network Coordinating Gateway for Allocating Satellite and Terrestrial Resources", by Robert A. Wiedeman and Paul A. Monte; to U.S. Patent No.: 5,303,286, "Wireless Telephone/Satellite Roaming System", by Robert A. Wiedeman; to U.S. Patent No.: 5,619,525, "Closed Loop Power Control for Low Earth Orbit Satellite Communications System", by Robert A. Wiedeman and Michael J. Sites; and to U.S. Patent No.: 5,896,558 "Interactive Fixed and Mobile Satellite Network", by Robert A. Wiedeman, for teaching various embodiments of satellite communications systems, such as low earth orbit (LEO) satellite systems, that can benefit from the teachings of this invention. The disclosures of these various U.S. Patents are incorporated by reference herein in their entireties, in so far as they do not conflict with the teachings of this invention.

Referring to Fig. 5, the exemplary UT 2 includes one or more service link antennas for transmitting and receiving RF signals and a RF transmitter (TX) 2A and a RF receiver (RX) 2B, respectively, coupled to the antennas. The UT 2 further includes an electronics block 2C which contains, typically, a controller comprised of one or more microprocessors and associated memories and support circuits, including the required input and output speech transducers (for a voice terminal), as well as the required speech processing circuits, including a voice coder and a voice decoder and/or data transmission capabilities. A modulator, demodulator, interleaver, deinterleaver, etc., as is known in the art, are also typically included.

The UT 2 may be capable of operating in a full duplex mode and communicate via, by example, L-band RF links (return uplink) and S-band RF links (forward downlink) with appropriate transponders of the satellite 1. The return L band link may operate within a frequency range of 1.61 - 1.625 GHz, a bandwidth of 16.5 MHz, and may be modulated with packetized digital voice signals and/or data signals in accordance with a presently preferred direct sequence (DS) code division multiple access (CDMA) spread spectrum technique. The forward S band downlink may operate within a frequency range of 2.485 - 2.5 GHz at a bandwidth of 16.5 MHz. The forward link may be modulated at the GW 18 in accordance with the DS-CDMA spread spectrum technique.

The exemplary GW 18 also includes feederlink antennas (typically steerable parabolic antennas) for transmitting and receiving RF signals, an RF transmitter (TX) 18A and a RF receiver (RX) 18B, respectively, coupled to the antennas. The GW 18 further includes an electronics block 18C which contains, typically, a GW controller comprised of one or more microprocessors and associated memories and support circuits, and voice processing circuitry embodied in banks of voice coders and voice decoders, etc., as well as data transmission capabilities.

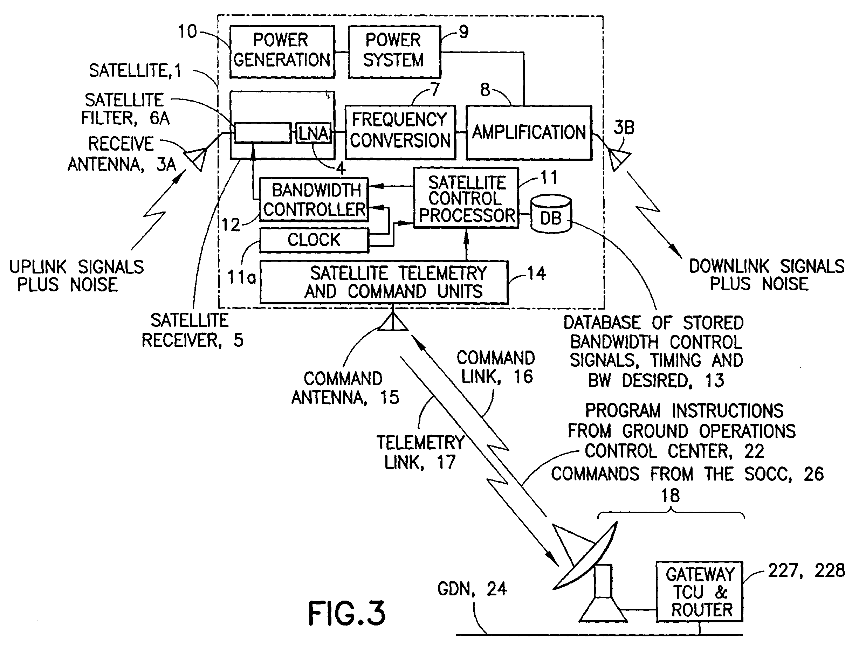

The GW 18 thus communicates with the satellite 1 via, by example, a full duplex RF forward feederlink and return feederlink that operate within a range of frequencies generally above 3 GHz, such as within the C-band or the Ka band. The bidirectional feederlinks may also be used to convey satellite commands to the satellite 1 as well as telemetry information, or the separate control and telemetry antenna 15 can be used (see Fig. 3).

The satellite 1 includes a forward service link (GW to UT) 10 transponder comprised of a feeder uplink receiver 2A and a service downlink transmitter 2E, as well as a reverse service link (UT to GW) receiver 2C and a feeder downlink transmitter (2D). This invention is most concerned with the operation and construction of the service uplink receiver 2C, and with its resultant bandwidth translation to the feeder downlink.

The satellite 1 is one of a plurality of satellites of a satellite constellation, as shown in Fig. 4, which may a NGSO or a GSO constellation. In the preferred embodiment the constellation is of the NGSO type, but this is not a 20 limitation upon the practice of this invention.

More particularly, the space segment of the MSCS 20 comprises a constellation of the satellites 1. The satellites 1 may be distributed in non-synchronous orbits (NGSO) around the earth, such as low earth orbits (LEO), medium earth orbits (MEO), Molniya, or other orbits as well. The constellation of satellites 1 may also be disposed in GEO-synchronous orbits (GSO). Each of the orbiting satellites provides a respective coverage area on the earth's surface. Each coverage area may be composed of from one to many beams of any suitable beam shape. For example, the NGSO coverage area is illuminated by sixteen spot beams. The coverage areas corresponding to NGSO satellites 1 move across the surface of the earth according to the orbits of the satellites. In contrast, the GSO orbit satellite coverage areas appear to be fixed on the surface of the earth. However, the described invention applies as well to a fixed coverage area of a GSO satellite, as will become apparent from the following description of the present invention

Referring now also to Fig. 6, the summation of the individual coverage areas from the orbiting satellites 1 in the space segment provides the MSCS 20 with a total coverage or service area. In the preferred embodiment, the total coverage area provided by the constellation of satellites 1 substantially covers the surface of the earth. In addition, the coverage areas of the respective satellites 1 may be overlapping such that any given location in the total coverage area of the MSCS 20 may be within the overlapping coverage areas of preferably two or more satellites. For example, the constellation may include a total of 48 satellites 1 deployed in a 1414km LEO. The satellites may be distributed in eight orbital planes with six equally spaced satellites per plane (Walker constellation). The orbital planes may be inclined at 52 degrees with respect to the equator, and each satellite completes an orbit generally once every 114 minutes. Such a distribution provides approximately full-earth coverage with at least two satellites in view at any given time from a particular location in the total coverage area between about 70 degrees south latitude and about 70 degrees north latitude.

The total coverage area includes several service areas B 30 and C. In the preferred embodiment the service areas maybe, by example, the land surface areas of the world. Within each service area B, C there are one or more traffic areas A-n wherein the user terminals 2 are deployed. While five traffic areas are shown in Fig. 6, there can be any number thereof. The traffic areas A-n are distributed globally and, as a result, there exists a difference in the instantaneous reverse service link signals emitted from the respective traffic areas due to factors such as the variation in times and time zones, day versus night, the general population density and the calling habits of the users. The total coverage area of the satellites 1 may also include one or more unserved areas (UAs) between and generally surrounding the service areas B, C. The unserved areas may be composed of the oceans, or large portions of land mass where little or no traffic is being provided. Furthermore, there may be areas where there is no business arrangement in place for providing the services of the MSCS 20, and these areas may also be included in the unserved area.

The gateway electronics 18C shown in Fig. 5 is also assumed to include a gateway interface (GWI) to provide connections to a Ground Data Network (GDN) 24 through which the gateway 18 communicates with a ground operations control center (GOCC) 22, and possibly other gateways. The GWI also provides connections to one or more terrestrial telephone and data communications networks, such as the Public Switched Telephone Network (PSTN) 25, whereby individual ones of the UTs 2 can be connected to any wired or wireless telephone, or to another UT, through the terrestrial telecommunications network.

The GDN 24 may be conveyed wholly by terrestrial links, or at least partially through satellite links. In addition the GDN 24 may be composed of links within the satellite constellation itself. The GOCC 22 provides overall communications control, and constellation resource planning, allocation and control. The satellite transponder configuration is controlled via a satellite operations control center (SOCC) 26 which is also connected to the GDN 24 and to the GOCC 22. The SOCC 26 is connected via the GDN 24 to one or more telemetry tracking and command stations (TT&C station) 28. The TT&C stations 28 receive telemetry from the satellites 1 over telemetry downlinks 17 and transit commands to the satellites on control related uplinks 16 (see also Fig. 3). These links may be on separate frequencies or within the bandwidth transmitted to the UTs 2 by the GWs 18. A single TT&C station may control many different satellites at a time, and may be a separate unit or one associated with a GW 18. Several TT&C stations provide world wide coverage, however, a single TT&C station could be employed to control all of the constellation, with or without satellite crosslinks, as the preferred LEO constellation causes all of the satellites 1 to periodically come within view of the TT&C station 28.

The traffic from the user terminal 2 is known by the gateway 18 that it is connected to. The gateway 18 generates a detailed call record of each connection to various user terminals. In a preferred embodiment, the type of user terminal, such as handheld, mobile, or fixed, as well as the power type and other information is available. The utilization of the available frequency spectrum by the user terminals 2, who are called at random according to a traffic pattern of usage, is thus known by the individual gateways 18 by time of day. This information is gathered, aggregated, preprocessed and formatted by the gateway 18 and transmitted over the GDN 24 to the GOCC 22. All gateways 18 thus provide traffic-related and other information to the GOCC 22 either in near-real time, or by storing the information for a period of time (for example, one hour or one day) for later transmission to the GOCC 22.

For example, the GW 18 when processing a call or registering a user onto the system for access, performs a position location of the user. The call is known to the GW 18 as to its location, traffic, terminal type and other technical data. The GW 18 can aggregate all traffic from sub-regions of its service area, preprocess the information, and send it to the GOCC 22. The GOCC 22 can then analyze and develop a plan for operating the satellite 1 using the known location-dependent traffic information on a terminal-type by terminal-type basis, or may simply perform this function while ignoring the terminal-type.

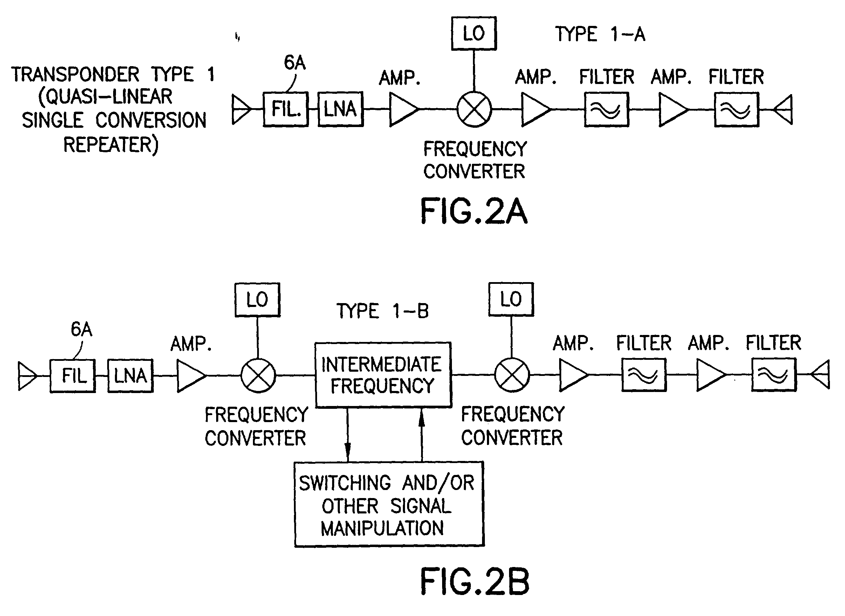

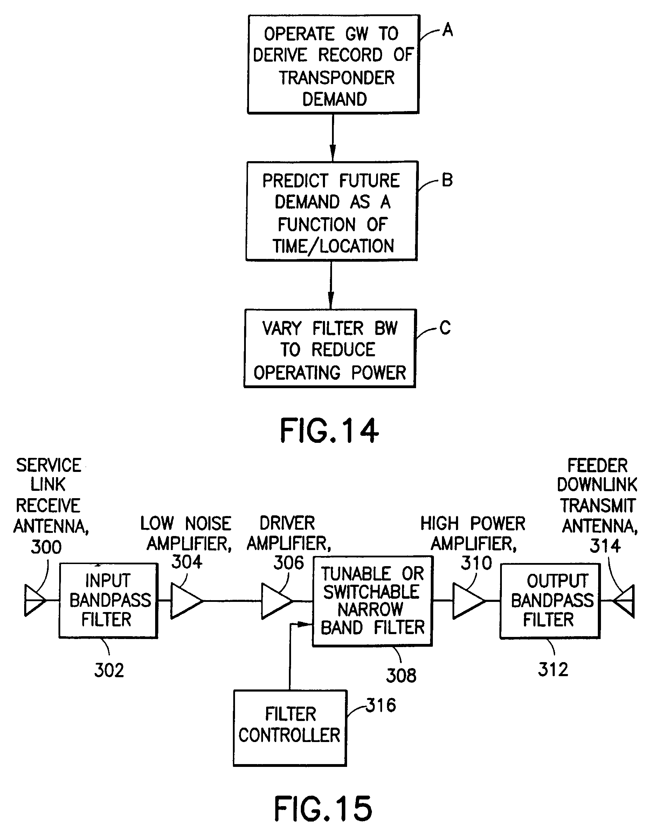

In a preferred embodiment of this invention one or more of the various transponder types illustrated in Figs. 2A-2D, described in further detail below, can be combined in the return transponder of each satellite 1 of the MSCS 20 to perform different functions and allow various modes of operation. In particular, in the instant invention, the return transponder of each satellite 1 may utilize both regenerative and quasi-linear transponders to perform signal routing, as described in further detail below. A forward transponder is shown in Fig. 15, and is also described in further detail below.

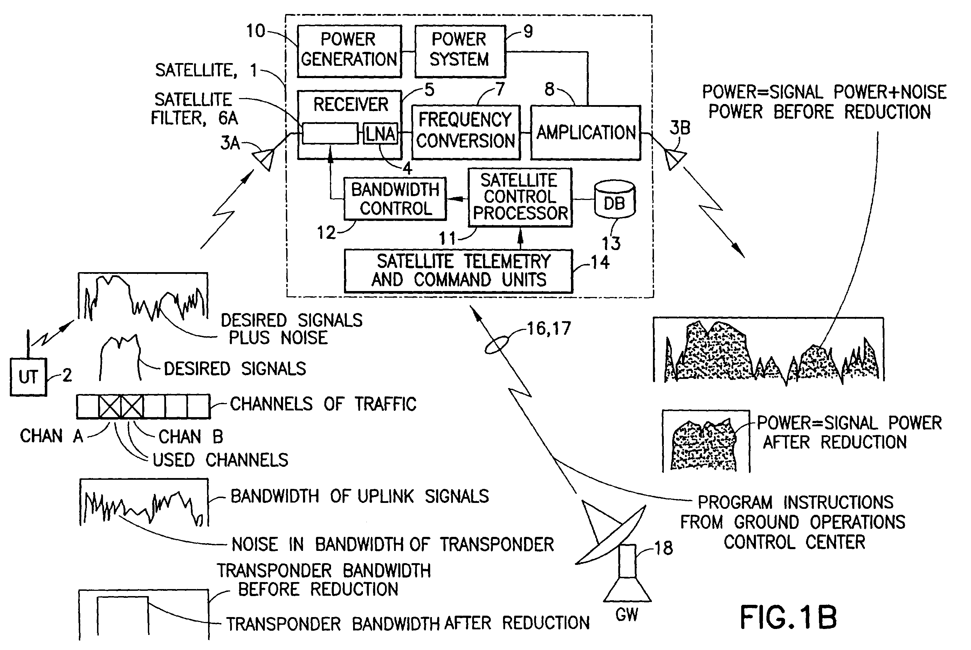

Referring now to Figs. 1B and 3, wherein elements found also in Fig. 1A are numbered accordingly, the satellite return transponder input filter 6 is modified to be a programmable filter 6A. The input filter 6A of the return transponder of each satellite 1 may be of a bandpass type, low or high pass types, band stop type, or combinations of any of these forming a synthesizer controlled bandwidth. Alternately, various filter bandwidths implemented with various types of technology may be used, and switched in and out of the receiver path upon command.

The input filter 6A is coupled to a bandwidth controller 12 that in turn is coupled to a satellite control processor 11. The bandwidth controller 12 may vary the bandwidth of the input filter 6A according to the number of desired input channels in the return uplink. The input filter 6A may be switched or continuously controlled by the bandwidth controller 12 to vary the input filter's bandwidth (or filter type.) In addition, the switching performed by the bandwidth controller 12 may include elimination of one or more of the return link beams, by directing the input signals from these beams to a dummy load, under the control of, for example, a gateway 18. Preferably, the bandwidth controller 12 is operated by the satellite control processor 11 which is also on-board the satellite 1, though the bandwidth controller 12 may also be adapted to be operated from a suitable ground controller (making real time bandwidth control possible.) The bandwidth controller 12 could also be operated from a geosynchronous or other type of higher-orbit satellite acting as a control station. The satellite control processor 11 is suitably programmed to provide instructions in real time or substantially real time to the filter bandwidth controller 12 according to orbital parameters such as, for example, the orbital location of the satellite 1, the local time at the satellite 1, the sub-satellite point, the orientation of the satellite's orbital plane with respect to the sun-earth line, or any other orbital parameter. In addition, it is within the scope of the teaching of this invention to sense the amount of traffic on adjacent satellites 1 (due to overlapping beam coverage), and to adjust the bandwidth accordingly. The satellite control processor 11 includes an appropriate memory device for storing a data base 13 of information, such as a list of input filter 6A uplinked bandwidth control commands, and/or historical traffic data, to continuously or step-wise vary the bandwidth of the filter 6A, or the selected filter type, in real time. The information in the data base 13 may be loaded initially with default information and then updated periodically, as described further below, so as to contain near real time parameters used to control the return link transponder bandwidth. An onboard clock 11a may be used to provide the satellite control processor 11 with local time information. Alternately, an output or IF stage tuneable filter may be employed.

The satellite control processor 11 may be coupled to a satellite telemetry and command system 14 to receive program instructions from a ground controller, typically the TT&C station 28, via a command antenna 15 of the satellite telemetry and command system 14. In addition, the satellite telemetry and command system 14 may be used to upload a different program to the satellite control processor 11 for varying the bandwidth of the input filter GA using different parameters.

Note should be made in Fig. 1B of the return uplink waveforms which show the desired signals, plus noise, for an exemplary case where two adjacent frequency channels are in use (CHAN A, CHAN B). Also shown is the resultant transponder bandwidth both before and after reduction by the input filter GA, in accordance with this invention. The corresponding reverse downlink waveforms depict the significant reduction in downlink power made possible by tuning (narrowing) the bandwidth of the input filter 6A

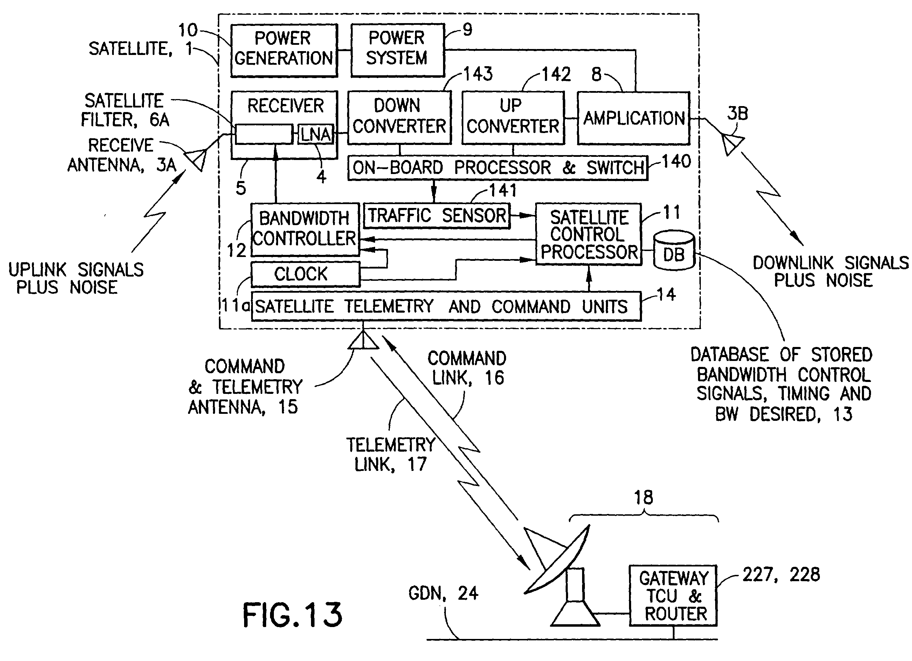

Fig. 1B also illustrates a representative communication path between a representative user terminal 2 and GW 18, of the MSCS 1 within the coverage area of one of the satellites 1. The communication path between the user terminal 2 and the GW 18 may be routed simultaneously over several satellites (not shown). Furthermore, the communication path between the user terminal 2 and the GW does not use inter-satellite links, though other communication paths between the user terminal and other gateways may include one or more inter-satellite links. Alternatively, communication paths may be established only between user terminals 2 via one or more satellites 1 without being routed to a gateway 18. In the preferred embodiment, the satellite 1 functions as a "bent-pipe" repeater to receive a communications traffic signal (such as speech and/or data) from the user terminal 2 or from the GW 18, convert the received communications traffic signal to another frequency band, and to then re-transmit the converted signal. In alternate embodiments, the satellites 1 of the MSCS 20 may be adapted to demodulate the received transmission to perform on-board signal processing of the received communication before re-transmission. The present invention is described hereafter primarily with specific reference to satellites operating as "bent-pipe" repeaters, though the features of the present invention apply equally to satellites which perform on-board processing of the received communication (see, for example, Fig. 13.)

In Fig. 3 the antennas 3A, 3B may be omni-directional, direct radiating type, reflector/feed types, phased array types, or virtually any other type of antenna. The antennas may be combined for transmitting and receiving in a single antenna (not shown), with the receive and transmit signals separated by other equipment, such as a diplexer.

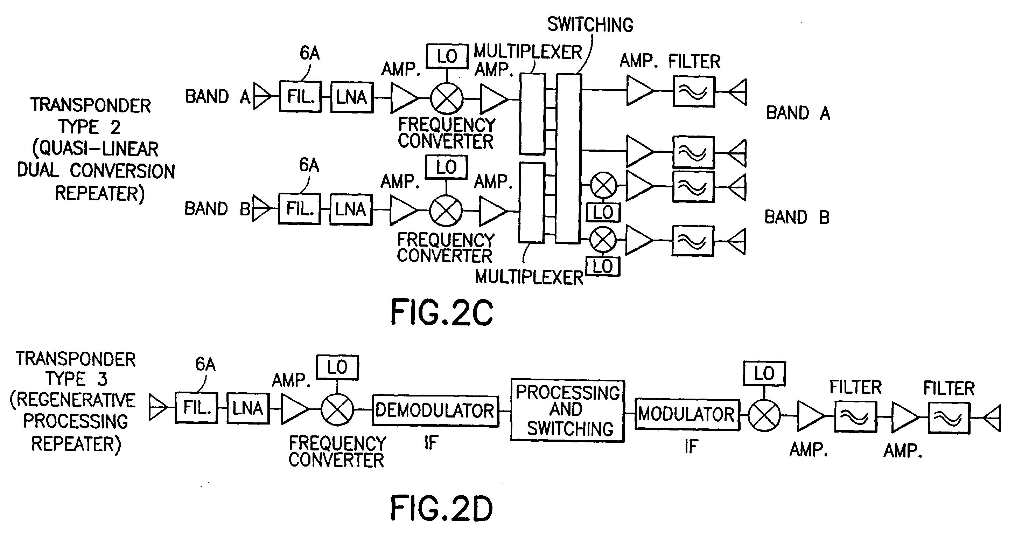

The return transponder may include one or more transponder types. Suitable types include the quasi-linear single conversion repeater (Figs. 2A, 2B), the quasi-linear dual conversion repeater (Fig. 2C), or the regenerative processing repeater (Fig. 2D).

A first type of quasi-linear single conversion repeater (Fig. 2A) receives, separates, and amplifies its assigned uplink carrier, translates the frequency to the downlink band, and amplifies the signal for retransmission on the downlink. This transponder translates from the uplink to the downlink band in one step. The early stages of the repeater usually are comprised of Low Noise Amplifiers to amplify the received frequency band, filters to eliminate energy wholly outside the operating band, and a broadband frequency converter to shift the entire operating band from the uplink to the downlink frequency. Another version of this repeater type, (Type 2, see Fig. 2B) uses two local oscillators (LOs) to convert the frequency from and to the final downlink frequency, with an intermediate frequency utilized in between the local oscillators. This type of transponder allows manipulation of the signals at generally a much lower frequency, such as UHF or even lower. This manipulation may utilize Surface Acoustic Wave Filters (SAW filters) to further allow switching, frequency shifting, and other manipulation for various downlink signal functions.

The quasi-linear dual conversion repeater, shown in Fig. 2C, has a two band operation where band A is being transmitted on one set of frequencies, and band B is being transmitted on a second band of frequencies. The frequencies of both are translated to one or the other (in Fig. 2C it is shown as translated to band A). The translated frequencies can then be multiplexed, switched or otherwise manipulated or cross-connected. After this, the frequencies destined for the band A downlink are sent to the band A downlink amplifiers and, in turn, to the antennas for band A. The signals intended for the band B downlink are further translated to the band B downlink frequency and transmitted.

Referring to Fig. 2D, the regenerative repeater performs the receiving and transmitting functions in substantially the same manner as the single conversion or dual conversion transponders. However, the regenerator contains in each transmission link a demodulator that demodulates the uplink signal to the digital baseband signal, and a modulator which remodulates that signal on a downlink carrier. The demodulated digital signal is retimed and restored to a standard form which serves to isolate the uplink performance from the downlink performance, thus preventing an accumulation of noise.

As was stated previously, in any of these transponder types the input filter or filters 6A are made programmable in at least a bandwidth characteristic thereof, in order control and limit the downlink power that is transmitted outside of the portion required for the desired signal.

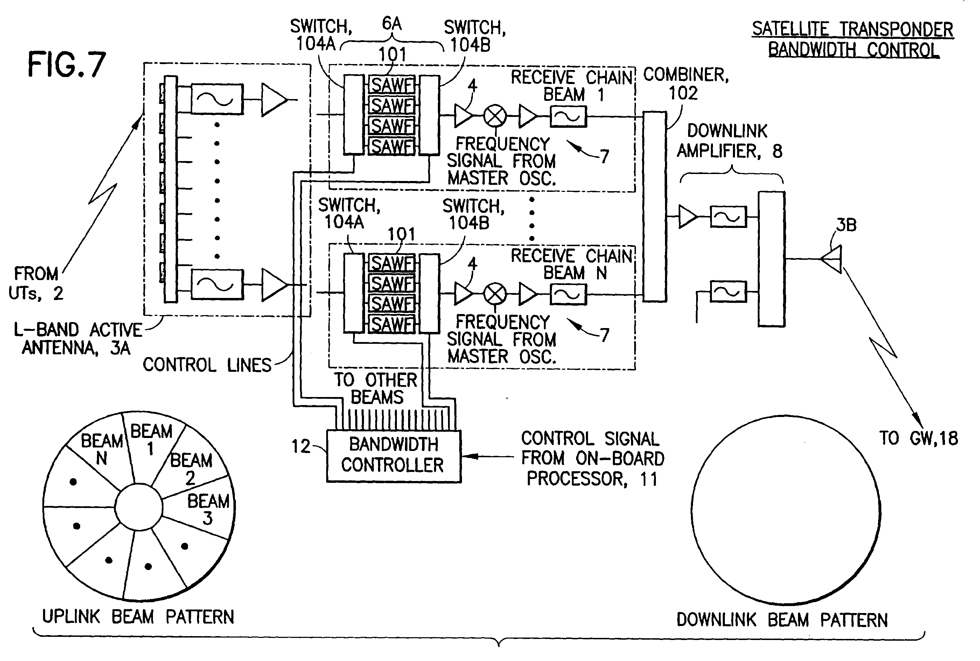

Referring now to Fig. 7, there is shown a presently preferred embodiment for effecting control of the satellite return transponder bandwidth. The return uplink antenna (e.g., an L-band antenna) 3A of the satellite return transponder is depicted as an active phased array. However, the return uplink antenna 3A of the satellite 1 can be a passive design, with or without a reflector for increasing the antenna gain. The antenna 3A receives signals from N beams, e.g., 16 beams in the preferred design, however N can be any number greater than one. There are 16 receive chains, one for each beam, and the output of the antenna 3A is coupled to each receive chain. Prior to the LNA 4 in each receive chain is one of the programmable filters 6A. In this embodiment the filter 6A is comprised of first and second (input and output) switches 104A, 104B, and a plurality of SAW filters 101. In this preferred embodiment there are four SAW filters 101 which are switched in or out depending on the bandwidth used. While four filters are shown, there may be any number greater than one. For the case of one SAW filter 101 bandwidth control can still be achieved by switching the filter in or out. Furthermore, all of the filters 101 could be switched out and a dummy load switched in to terminate the a particular beam input altogether. Switches 104A and 104B control the filter 6A configuration in use at any given time. The bandwidth controller 12 provides drive signals to set the positions of the switches 104A and 104B for each beam and receiver chain, thus setting the individual chain bandwidth for each beam.

Following the filter 6A in each receive chain is the frequency conversion unit 7, comprised of a mixer, isolation amplifier and filter, which in turn is followed by a signal combiner 102, the return downlink amplifier 8, and the antenna 3B.

The described embodiment employs the surface acoustic wave (SAW) filters, however, any type of filter may be used. It is also not required to utilize switching. The bandwidth controller 12 can be configured to operate any suitable type of tunable filter(s) between the antenna 3A and the LNA 4, thus making fine control of the bandwidth available.

Referring also again to Fig. 6, the unserved area emits energy which is received as noise in the transponder antenna and fed to the LNA 4 via the filter 6A. Changing the bandwidth of the filter 6A in response to the appearance of traffic and/or an amount of traffic optimizes the utilization of the power on the satellite 1 at any given time, and reduces the orbit average power (OAP) used on the satellite, thus reducing the required size of the satellite power system 9 and reducing satellite mass.

In combination, the cost of the power system 9 is reduced due to decreased solar array and battery size (i.e., the cost of the power generation system 10 is reduced), and the launch cost is reduced due to decreased satellite mass. Furthermore, dependence on the use of the on-board satellite batteries is reduced, thereby improving the battery cycling history and extending the battery life. The system further maximizes the number of circuits over land masses by minimizing power demand over the oceans.

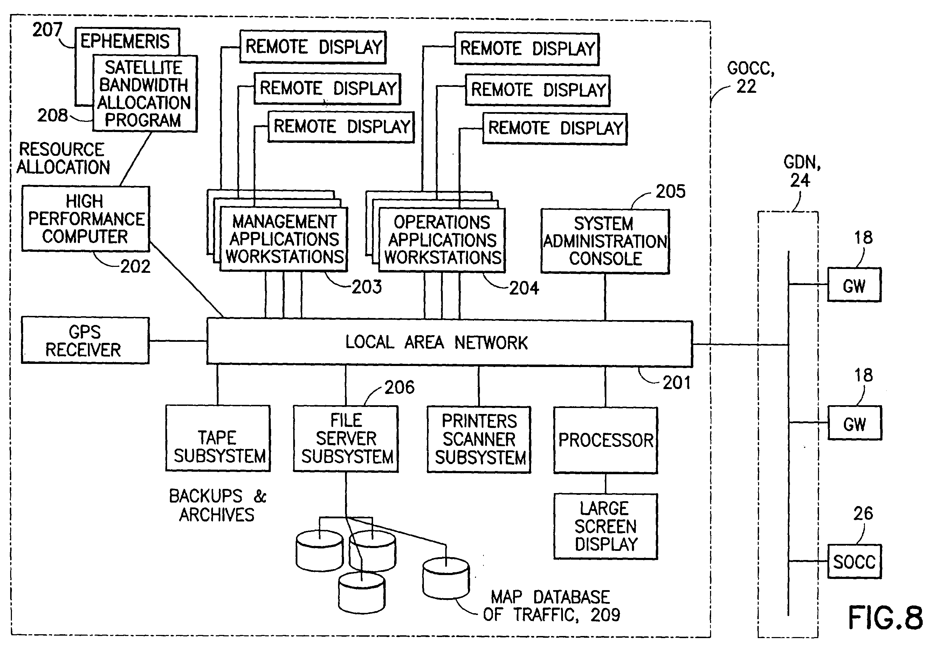

Refer now to Fig. 8, the GOCC 22 receives aggregate traffic information as to the number and/or type of calls versus time of day from the gateways 18, which is sent via the GDN 24. The number of calls and other data are received by a local area network (LAN) 201 which is linked to a high performance computer 202. Management and operations workstations 203, 204 are also linked to the LAN 201 and provide operator interfaces to the GOCC 22. Through these interfaces an operator is enabled to vary the bandwidth of the reverse link transponder filter 6A manually, or the operator can reprogram the on-board satellite processor 11. A systems administration workstation 205 is used to manage the software and hardware configurations of the GOCC 22. A large data storage system 206 serves to store the large amount of data which is processed and managed, including the historical database 209 regarding traffic (received from the GWs 18). Various other peripheral equipment is shown in Fig. 8, but this other equipment is not germane to an understanding of the present invention.

There is a satellite bandwidth allocation program 208 which is used to calculate the input filter 6A bandwidth that is required on each satellite 1, according to where the satellite is within its orbit. Ephemeris data on the various satellite orbits is another program 207 which is used to determine where in time the satellites are located. A map database of traffic intensity, traffic type, and location versus time, and other parameters, is stored in the database 209. Historical utilization, based on the map database of information, is employed by the satellite bandwidth allocation program 208. Allocation program 208, which uses the stored ephemeris data 207 as well as current satellite health status provided by the SOCC 26, calculates and establishes a table of bandwidth versus time for each satellite beam on each satellite 1. The computer 202, as part of its computation cycle, computes the schedule of bandwidth, what frequency sub-band to use, and other technical information required for each satellite 1 according to the time of day and where in the orbit the satellite 1 is located. These tables of data are sent to the satellite operations control center (SOCC) 26 via the GDN 24. The SOCC 26 then formats messages to be sent to the satellite 1 to update the on-board bandwidth controller 12 and the stored data in the satellite database 13.

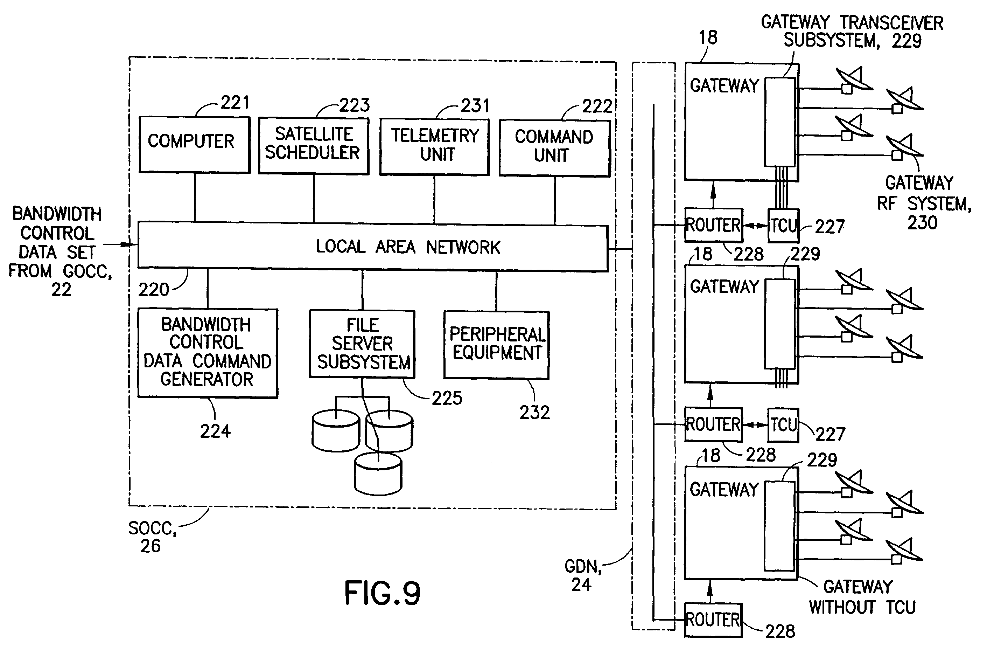

The SOCC 26 is shown in Fig. 9. The tables of bandwidth control data sent to the SOCC 26 from the GOCC 22, as discussed above, are received on the SOCC local area network (LAN) 220. The received data is stored in a file server subsystem 225 and processed by a SOCC computer 221. The SOCC computer 221, together with a satellite command unit 222 and a satellite scheduler 223, formats a bandwidth control signal according to that decided on by a bandwidth control data command generator 224, and designates a command to be sent at a particular time to a particular satellite 1. The formatted command containing the bandwidth control signal is sent via the GDN 24 to the gateway 18 designated by the satellite scheduler 223. Two types of gateways 18 are shown in Fig. 9. One type of gateway 18 does not include a telemetry and command unit (TCU) 227. These gateways receive the information on the traffic from users as described above, and route the information to the GOCC 22 in the preferred embodiment, but do not transmit commands to the satellites 1. The other type of gateway 18 is the TCU equipped gateway. At least one, but preferably several, are deployed in the MSCS 20. The TCU 227 is connected to the GDN 24 by way of a router 228 which routes the information properly to the desired unit. The TCU 227 is coupled to a gateway transceiver subsystem 229 which integrates the TCU signal onto the RF signal for transmission to the desired satellite 1. At the desired time, when the satellite 1 designated to receive the uploaded table of satellite bandwidth allocations and time is present in the field of view of the TCU-enabled gateway 18, the gateway transceiver subsystem 229 begins to track the desired satellite 1. At the scheduled time, the TCU-enabled gateway 18 uplinks the table of bandwidth allocations to the satellite 1 by means of the gateway RF system 230. Depicted is an exemplary four antenna RF system 230, however only one antenna is necessary for this function. The use of four antennas reduces the amount of time required to complete this function. Likewise, it is shown that there may be many such gateways with TCUs. While it is only necessary to have one, it is beneficial to have several, in order to increase the time of individual satellite contact and enhance reliability of contacting and controlling the satellites.

It should be noted that it is not necessary to utilize TCUs to conform to the principles of this invention. It is possible to send the commands to the gateways 18 in a different manner, such as by imbedding the commands in traffic messages to be decoded on the satellite 1 and then applied to the satellite on-board processor 11. In addition, it is possible to command the bandwidth information directly to the satellite 1 in real time, which enables control of the satellite bandwidth in real time as well. In addition, an on-board GPS system can provide data on satellite ephemeris in real time, without ground commands.

Referring also to Fig. 3, the following procedure can be used to initialize and refresh the satellite stored table of bandwidth control instructions used by individual satellites wherever they are in their orbit. The instructions are sent from the SOCC 26 to the TCU-enabled gateway 18 that has been selected to command the desired satellite 1. The gateway router 228 accepts the signals and routes the command to the TCU 227 where it is formatted and sent to the Gateway Transceiver Subsystem (GTS) 229 for uplinking via the RF subsystem 230. The program instruction table is uplinked to the desired satellite on the command link 16. The satellite TT&C antenna 15 receives the uplink signal and routes it to the satellite telemetry and command unit 14. The command reception portion of the TT&C subsystem 14 downconverts the signal from RF, decodes the signal, and routes it to the satellite control processor 11. The satellite control processor 11 accepts the input data, processes it and stores it in the on-board database 13. The on-board processor 11 then utilizes this data in conjunction with the on-board timing clock 11a to command the bandwidth controller 12 to vary the bandwidth of one or more of the satellite filters 16A, as described above with respect to Fig. 7.

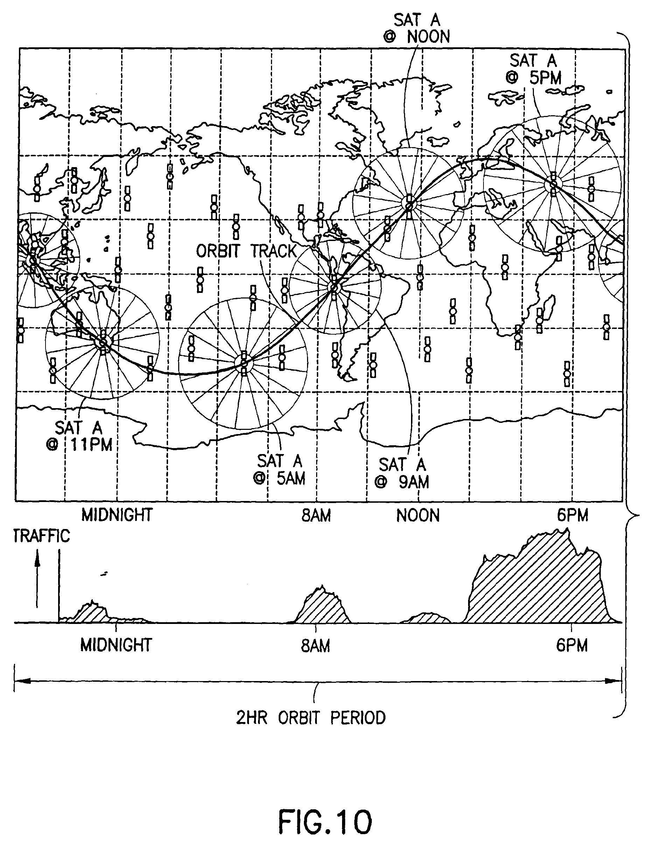

Referring to Fig. 10, an orbit of a single satellite is shown. The aggregate power of the satellite-to-gateway signal can be minimized on satellite A by varying the bandwidth of all of the receiver chains in an optimum manner. Satellite A is shown in several positions within a single orbit at various local times. The orbit shown is a 1400 km altitude circular inclined (52 degree) orbit with a nearly 2 hour period. Ground traffic accessing the satellite is shown correlated with the satellites orbit position.

Beam 1 is shown in the various positions that it is projected onto the surface of the earth at the various local times. Since during one orbit of the earth, the satellite 1 traverses all time zones, the traffic will be at a maximum in usually only one time zone. However, it is not necessary that any of the beams of a satellite be required to carry maximum traffic at any given time. The traffic shown for the one exemplary orbit is not constant from orbit to orbit, but will normally vary for this satellite 1 from time to time and orbit to orbit. The same satellite 1 will not, in general, have the same loading on the next orbit, thus the programming and bandwidth of the filter 6A associated with Beam 1 will vary from orbit to orbit as well.

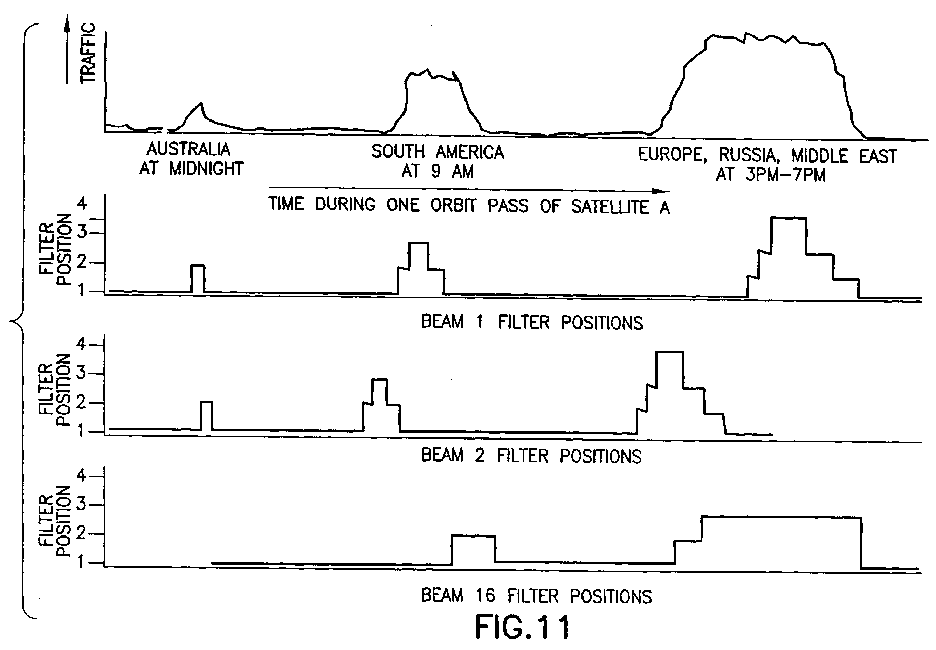

Fig. 11 shows, by example, three of the beam filter positions according to the beam location on the earth, correlated with the offered traffic, and assuming the four SAY filter 101 construction described previously with regard to Fig. 7. Other beams in the reverse link transponder will typically exhibit a different programming, as depicted for Beams 2 and 16. The positions of the switches 104A, 104B of the filter 6A can thus be matched to a physical map of the earth, which is correlated with orbit sub-satellite point local time, beam position and traffic.

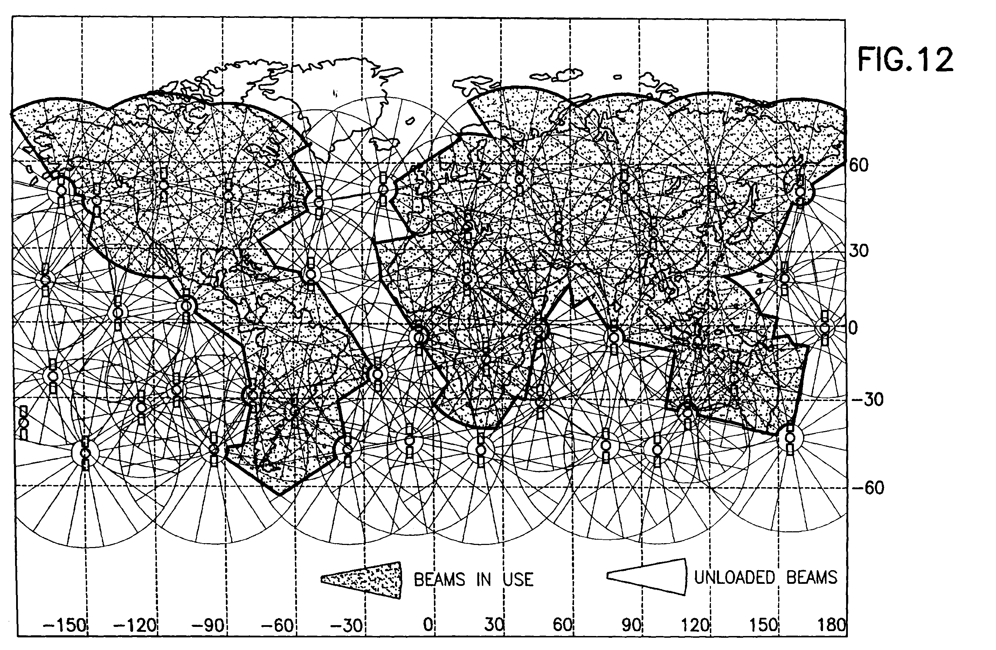

Fig. 12 depicts a 'snapshot' in time of a constellation of 48 satellites each with 16 beams. Beams which have higher than minimum bandwidth activated are shown darkened. What is clearly evident from this Figure is the large amount of beams that are able to be operated with the minimum bandwidth, or even no bandwidth assigned. Even if the beams are darkened to show usage, many (especially in the far north) will be at minimum bandwidth. In addition, much of the earth will be covered during the night time periods, the land masses during the late night will have minimal traffic, thus also allowing the operation of the beams at minimum bandwidth.

An alternative embodiment of the satellite 1, shown in Fig. 13, employs an on-board traffic sensor 141 which automatically varies the bandwidth according to received traffic sent to the satellite 1. The uplink traffic signals and noise are applied to the receive antenna 3A.

The signals are then routed to the LNA 4 via the filter 6A. A minimum bandwidth filter 6A in a traffic area is preferred in order to let at least one traffic channel pass, however, the on-board processor 11 may cut off the reception of the beam signals according to the satellite position, or at a predetermined time, according to a stored program in DB 13. The filtered and received signal, after amplification by the LNA 4, is down converted in block 143 to either an IF or to baseband signal and is directed to a signal processor 140 which may (but not necessarily) include a switch. The traffic, either link by link, or in a combinations of links, which may have been combined or s142witched, is then sent to an upconverter 142 for further amplification and is then transmitted on the downlink. A traffic sensor 141 is coupled to the baseband processor 140. The traffic sensor 141 collects or measures information on the traffic intensity within a beam, and sends it to the satellite control processor 11. The satellite control processor 11 time tags the data and stores it in the satellite database 13. The satellite processor 11 then uses this data to calculate the required bandwidth according to the local time, either in real-time, or by using historical data. In principle, the satellite processor updates the table of bandwidth versus time. The satellite bandwidth versus time table is executed in the satellite control processor 11, and the bandwidth control signal is passed to the bandwidth controller 12, which operates to control the bandwidth of the filter 6A as before.

Described above has been a technique to reduce the power utilized on a satellite 1 by reducing the received input noise by the use of a commanded or a preprogrammed reduction in bandwidth of a received band of frequencies, as the satellite orbits the earth.

A method has also been disclosed for reducing the power consumption of a communication satellite that includes a RF transponder. Referring to Fig. 14, the method includes steps of (A) operating at least one gateway to derive a historical record of demand for the transponder as a function of time and location within at least a portion of a service area; (B) using the historical record for predicting a future demand for the transponder as a function of time and location within the service area; and (C) varying a bandwidth of an input filter of the transponder in accordance with the predicted future demand so as to reduce an amount of received noise and unwanted signal(s) that are amplified by the transponder. The step (B) of predicting can predict the future demand as a function of individual beams of the multiple beam transponder receive antenna, and the step (C) of varying then preferably varies the bandwidth on a beam by beam basis.

Further in this regard, a LEO system of satellites are provided by a constellation of multiple satellites 1. Assume that one of the satellites 1 transits the earth in an orbit of 1400 km at an inclination of 52 degrees with respect to the equator. The satellite 1 may traverse the Indian sub-continent, the Indian Ocean, and then provide service to Australia, moving across that continent over a period of about 20 minutes. The satellite then proceeds in a northeasterly direction and begins to illuminate the North American continent. During the time that it spends over the South Pacific ocean the antenna beam is receiving noise input from the ocean, which it then amplifies and sends to the ground, even though there is no gateway present to receive the feeder downlink signal.

In accordance with this invention, and by example, the traffic knowledge from previous time periods, having been gathered by the gateway(s) 18 serving Australia and sent to the GOCC 22, are analyzed and preprocessed into a series of commands to be executed by the satellite configuration controller (an on-board processor). The commands are uplinked to the satellite 1, and can comprise several days worth of commands. The commands are stored aboard the satellite 1, and their execution occurs automatically according to the local time in the current service area. The commands, in this example, switch in various filter bandwidths such as FULL (9 channels or 11.07 MHz), TWO THIRDS (6 channels), HALF (4 channels), THIRD (3 channels), MINIMUM (1 channel), or ZERO (no channels).

Returning to the example begun above, the bandwidth of the satellite 1 return link over India (depending on traffic) is set at some value (e.g., TWO THIRDS, for specifying six out of nine channels). When the satellite footprint exits India and begins its transit over the Indian Ocean, the filter set of ZERO is selected, thereby minimizing the noise being transmitted. When a substantial portion of Australia is covered by the footprint, the bandwidth of the filter set can be set to HALF, a sufficient amount of bandwidth to service Australia at the current local time. When the satellite footprint exits Australia, the filter set is again set to ZERO, thus minimizing noise amplification. When the satellite 1 begins to cover desired islands in the Pacific Ocean the filter set is switched to MINIMUM for the expected low level of traffic, and then set to ZERO upon exiting that portion of the South Pacific. After some minutes, the satellite 1 begins to cover North America. The filter set is then set for the expected level of traffic for the local time in North America. For example, if the local time is 2:00 A.M., then the filter set might be set to THIRD, while if the local time is 2:00 P.M., the filter set may be set to FULL to maximize the traffic handling capability of the satellite 1.

While discussed thus far primarily in the context of a return link transponder, inserting a further tunable or switchable filter in the forward link transponder of the satellite 1 can conserve additional power. Referring to Fig. 15, a satellite forward link (i.e., GW 18 to UT 2) transponder includes a feederlink receive antenna 300, an input bandpass filter 302, a LNA 304, a driver amplifier 306, a tuneable or switchable narrow band filter 308, a high power amplifier 310, an output bandpass filter 312, and a transmit antenna 314 (the frequency conversion stage is not shown). In this embodiment the link between the gateways 18 and the satellite is at approximately 5 GHz. However, a frequency allocation has recently been made for wireless local area networks ("Radio LANS") which are intended to use low power transmitters with electric fields contained mostly within buildings. The links intended for communication between gateways 18 and the LEO satellites 1 are supported by the high gain gateway antennas that direct concentrated energy towards the satellites. It is possible, though, that a number of Radio LANS that are concentrated in one area may, under some conditions, radiate towards the LEO satellites 1. In this case they could create interference with the feeder uplink to the satellite 1.

This interference can be mitigated if only the portion of the band being used instantaneously for the feederlink(s) were allowed to draw power from the final high power amplifiers that direct energy towards the UTs 2. The narrowband filter 308 (or a collection of narrowband filters) could thus be switched or tuned to pass only those frequency sub-bands that are known to be supporting feederlinks at each location and time. In this case the center frequency and bandwidth of the switchable or tunable filters 308 may be set to favor the desired signals and to reject the unwanted signals from Radio LAN and other sources, as well as the out of band noise.

A filter controller 316 is employed for controlling the operation of the filter 308, and can operate with a preprogrammed schedule for mitigating the effects of relatively fixed or constant feeder uplink noise and interference sources, and/or can operate in accordance with filter commands uplinked in real-time or near real-time. The filter controller 316 may also sense the occupied feeder uplink channels and set the filter 308 accordingly. In any case, the power of the service downlink from antenna 300 is better optimized for supporting only the required downlink traffic, and not feederlink noise, unwanted signal sources and other impairments. This technique can also be used for selectively turning a forward link pilot or reference channel on and off, by switching in a filter that attenuates the frequency channel that conveys the pilot.

Of course, the transponders of the satellite 1 can be constructed to include both the settable or programmable return link filter(s) 6A and the settable or programmable forward link filter(s) 308.

While discussed above with respect (primarily) to a LEO satellite communication system, it should be realized that other types of systems can benefit as well, such as VSAT and Direct Broadcast satellite systems. In addition to the above description, it should also be realized that inter-satellite links (ISL, not shown) may be used. In this case a third output from the feederlink equipment is routed to an ISL uplink equipment for transmission to another satellite. Downlinks from another satellite may be routed to either service or feeder downlink equipment.

Also, while the example of Fig. 1B shows the input filter 6A being narrowed in bandwidth so as to accommodate two adjacent frequency channels, it should be appreciated that the use of programmable notch or similar type of filter enables non-adjacent frequency channels to be accommodated as well.

Thus, while the invention has been particularly shown and described with respect to preferred embodiments thereof, it will be understood by those skilled in the art that changes in form and details may be made therein without departing from the scope and spirit of the invention.

## Claims

1. A communication satellite, comprising:
an RF transponder comprising a receive antenna (3A), an input filter (6A) having a programmable bandwidth, a receive amplifier (7), a transmit amplifier (8), and a transmit antenna (38) coupled together in series; and
an input filter controller (12) having an output coupled to said input filter for programming the filter bandwidth as the satellite orbits the earth.

2. A communication satellite as in claim 1, and further comprising a satellite data processor (11) having an output coupled to an input of said input filter controller (12), said satellite data processor (11) being responsive to an input filter bandwidth programming schedule stored on said satellite for causing the bandwidth of the input filter to be programmed in accordance with the schedule.

3. A communication satellite as in claim 1 or 2, wherein said input filter controller (12) is responsive to an input filter bandwidth programming schedule that is received from a ground station (18) for causing the bandwidth of the input filter to be programmed in accordance with the schedule.

4. A communication satellite as in claim 3, wherein the received filter bandwidth programming schedule is stored in said satellite.

5. A communication satellite as claimed in any preceding claim, wherein said receive antenna (3A) receives reverse uplink transmissions from a plurality of user terminals (2), and wherein said transmit antenna transmits reverse downlink transmissions to a ground station.

6. A communication satellite as in claim 1, wherein said input filter controller (12) programs the input filter bandwidth as a function of historical demand for the transponder, as the satellite orbits the earth.

7. A communication satellite as in claim 1, wherein said input filter controller (12) programs the input filter bandwidth as a function of predicted demand for the transponder, as the satellite orbits the earth.

8. A communication satellite as in claim 1, 3 or 4, wherein said input filter controller (12) programs the input filter bandwidth in real time in response to received commands generated at a ground station controller.

9. A communication satellite as in claim 1, 6 or 7, wherein said input filter controller (12) programs the input filter bandwidth in real time in response to commands generated on said satellite.

10. A communication satellite as in claim 1, 6 or 7, wherein said input filter controller (12) programs the input filter bandwidth based on commands prestored in a satellite memory.

11. A communication satellite as in any preceding claim, wherein the RF transponder is a forward link RF transponder, the receive antenna is a feeder uplink receive antenna and the transmit antenna is a service downlink transmit antenna.

12. A method to reduce the power consumption of a communication satellite that comprises a RF transponder, comprising steps of:
operating at least one gateway to derive a historical record of demand for the transponder as a function of time and location within at least a portion of a service area;
using the historical record in predicting a future demand for the transponder as a function of time and location within the service area; and
varying a bandwidth of an input filter of the transponder in accordance with the predicted future demand so as to reduce an amount of received noise that is amplified by the transponder.

13. A method as in claim 12, wherein the step of varying includes preliminary steps of:
generating a filter bandwidth programming schedule in accordance with the predicted demand; and
storing the filter bandwidth programming schedule in a memory of the satellite for use in varying the bandwidth of the input filter at predetermined times relative to local times within the service area.

14. A method as in claim 12, wherein the steps of varying includes preliminary steps of:
generating a filter bandwidth programming schedule in accordance with the predicted demand; and
storing the filter bandwidth programming schedule in a memory of the satellite for use in varying the bandwidth of the input filter at predetermined locations relative to the service area.

15. A method as in claim 12, 13 or 14, wherein the step of predicting predicts the future demand as a function of individual beams of a multiple beam transponder receive antenna.

16. A method as in claim 12, 13 or 14, wherein the step of predicting predicts the future demand as a function of individual beams of a multiple beam transponder receive antenna, and wherein the step of varying varies the bandwidth on a beam by beam basis.

17. A method to operate a mobile satellite communications system of a type that comprises a constellation of communication satellites each of which comprises a reverse link transponder for passing RF signals from user terminals to a gateway, comprising steps of:
operating individual ones of a plurality of gateways to each derive a historical record of demand for the transponder as a function of time and location within a portion of a service area serviced by each of the plurality of gateways;
using the historical records in predicting a future demand for the transponder of each satellite of the constellation as a function of time and location within the service area; and
varying a bandwidth of at least one input filter of the transponder of each satellite of the constellation in accordance with the predicted future demand so as to reduce an amount of received noise that is amplified by the transponder.

18. A method as in claim 17, wherein the step of varying includes preliminary steps of:
generating a filter bandwidth programming schedule in accordance with the predicted demand; and
storing the filter bandwidth programming schedule in a memory of the satellite for use in varying the bandwidth of the input filter at at least one of a predetermined time relative to a local time within the service area, or at a predetermined location within the service area.

19. A method as in claim 17 or 18, wherein the step of predicting predicts the future demand as a function of individual beams of a multiple beam transponder receive antenna, and wherein the step of varying varies the bandwidth on a beam by beam basis.

20. A method as in claim 17, 18 or 19, wherein the step of deriving a historical record of demand for the transponder as a function of time and location also considers types of terminals that use the transponder.
